# EUROPEAN PATENT SPECIFICATION

(11) **EP 1 595 774 B1**
(45) Date of publication and mention of the grant of the patent: **13.08.2008**
(21) Application number: 05102738.1
(22) Date of filing: 07.04.2005
(51) Int. Cl.: B62D 53/10

(54) **A safety system for a semi-trailer**
Sicherheitsvorrichtung eines Aufliegers
Système de sécurité pour semi-remorque

(30) Priority: 12.05.2004 SE 0401229
(43) Date of publication of application: 16.11.2005
(73) Proprietor: Scania CV AB (publ), 151 87 Södertälje (SE)
(72) Inventor: Staaf, Magnus, 155 34 Nykvarn (SE); Sjöblom, Helene, 126 51 Hägersten (SE)

(56) References cited:
- EP-A- 1 396 417
- DE-A1- 19 752 108
- PATENT ABSTRACTS OF JAPAN vol. 2003, no. 10, 8 October 2003 (2003-10-08) -& JP 2003 170722 A (NISSAN DIESEL MOTOR CO LTD), 17 June 2003 (2003-06-17)
- PATENT ABSTRACTS OF JAPAN vol. 1997, no. 02, 28 February 1997 (1997-02-28) -& JP 08 268015 A (NISSAN DIESEL MOTOR CO LTD), 15 October 1996 (1996-10-15)

## Description

### FIELD OF THE INVENTION AND PRIOR ART

The present invention relates to a safety system according to the preamble of claim 1, described in document JP 2003-170722, and a semi-trailer towing vehicle provided with such a safety system. The invention also relates to a method according to the preamble of claim 12, a computer program comprising computer program code for implementing said method, a computer program product comprising a data storage medium readable by an electronic control unit and having a computer program adapted to make an electronic control unit implement said method stored thereon, and an electronic control unit.

A semi-trailer towing vehicle is generally provided with a coupling member conventionally referred to as a fifth wheel. The fifth wheel constitutes a horizontally disposed platelike member fixedly mounted on the chassis of the towing vehicle at the rear of the towing vehicle. The fifth wheel generally has a rearwardly extending slot therein for receiving a king pin that projects downward from the chassis of the semi-trailer. The king pin is locked in place in the slot of the fifth wheel by means of a locking member. Towing vehicles are today often provided with air bellows at the rear wheel suspension. During transportation of a semi-trailer, the air pressure of the air bellows is normally set substantially higher than when the towing vehicle is driven without any semi-trailer coupled to it so as to compensate for the additional load on the rear wheel suspension from the semi-trailer and the goods accommodated in the semi-trailer. The air pressure level used when the towing vehicle transports a semi-trailer is in the following denominated "transport level" and the air pressure level used when the towing vehicle is driven on its own without any semi-trailer coupled to it is in the following denominated "driving level".

When the towing vehicle is to be uncoupled from the semi-trailer, the driver normally increases the air pressure of the air bellows above the "transport level" so as to raise the rear of the towing vehicle's chassis and thereby the front part of the semi-trailer. The higher air pressure level used when the chassis of the towing vehicle is raised during the uncoupling of the towing vehicle from a semi-trailer is in the following denominated "uncoupling level". After having increased the air pressure of the air bellows to the "uncoupling level" and released the fifth wheel locking member, the driver disconnects the electrical and pneumatic service lines between the towing vehicle and the semi-trailer and brings down the support legs provided under the chassis of the semi-trailer. The latter operations may be carried out manually or with the aid of automatic manoeuvring devices. The driver will then lower the pressure of the air bellows to the "driving level" and drive the towing vehicle away from the semi-trailer. In order to make sure that the king pin is properly disengaged from the fifth wheel, the driver might move the towing vehicle a short distance forward before lowering the air pressure to the "driving level".

If the towing vehicle is driven away from the semi-trailer before the air pressure of the air bellows has been lowered sufficiently, i.e. to a level close to the "driving level", the rear part of the towing vehicle might be thrown upwards by the high bellows pressures when the fifth wheel passes the front edge of the semi-trailer. There is a risk that the rear part of the towing vehicle's chassis and/or the equipment arranged thereon, such as tail lamps etc, will be damaged by hitting the semi-trailer or by getting stucked thereon when the rear part of the towing vehicle is thrown upwards in this manner. Since the semi-trailer is resting on its support legs, there is only a limited load on the air bellows of the rear wheel suspension when the air pressure of the air bellows is lowered from the "uncoupling level" to the "driving level" and this operation will generally take up to about 1 minute. The driver is generally eager to drive away as quickly as possible and it often happens that the driver misjudges the situation and drives away to early, i.e. before the air pressure of the air bellows has been lowered to such a level that the towing vehicle's rear part runs free of the semi-trailer chassis, thereby causing the above-indicated type of damages.

### OBJECT OF THE INVENTION

The object of the present invention is to provide a safety system and a method for preventing the above-indicated type of damages in connection with the uncoupling of a towing vehicle from a semi-trailer.

### SUMMARY OF THE INVENTION

Said object is achieved by means of a safety system comprising the features according to claim 1 and a method comprising the features according to claim 12.

According to the invention, safety measures are automatically initiated so as to prevent the towing vehicle from being damaged by the semi-trailer when driven away from the semi-trailer, the safety measures being initiated when the following conditions, optionally in combination with one or several further conditions, are simultaneously fulfilled:
- it has been detected that measures have been taken to uncouple the towing vehicle from a semi-trailer, and
- the air pressure of the rear wheel suspension's air bellows exceeds a given pressure threshold value.
The pressure threshold value is suitable set slightly above the "driving level". With the inventive solution, the safe driving away of the towing vehicle after an uncoupling of the towing vehicle from a semi-trailer will no longer depend on the judgement of the driver, which will reduce the risk of damages to the towing vehicle in this connection.

According to an embodiment of the invention, a warning, e.g. in the form of an acoustic signal and/or a light signal, is presented to a driver of the towing vehicle when said conditions are simultaneously fulfilled. Hereby the driver will be alerted that it is not safe to drive the towing vehicle away from the semi-trailer.

Further embodiments of the safety system and the method according to the present invention will appear from the independent claims and the subsequent description.

The invention also relates to a semi-trailer towing vehicle provided with a safety system according to the invention.

The invention also relates to a computer program according to claim 22, a computer program product according to claim 23 and an electronic control unit according to claim 24.

### BRIEF DESCRIPTION OF THE DRAWINGS

The invention will in the following be more closely described by means of embodiment examples, with reference to the appended drawings, where:
- Fig 1: is a schematical illustration of a towing vehicle coupled to a semi-trailer,
- Fig 2: is a schematical illustration of details of the towing vehicle and the semi-trailer according to Fig 1,
- Fig 3: is a an outline diagram of a safety system according to the invention,
- Fig 4: is an outline diagram of an electronic control unit for implementing the method according to the invention, and
- Fig 5: is a flow diagram detailing a method according to an embodiment of the invention.

### DETAILED DESCRIPTION OF EMBODIMENTS OF THE INVENTION

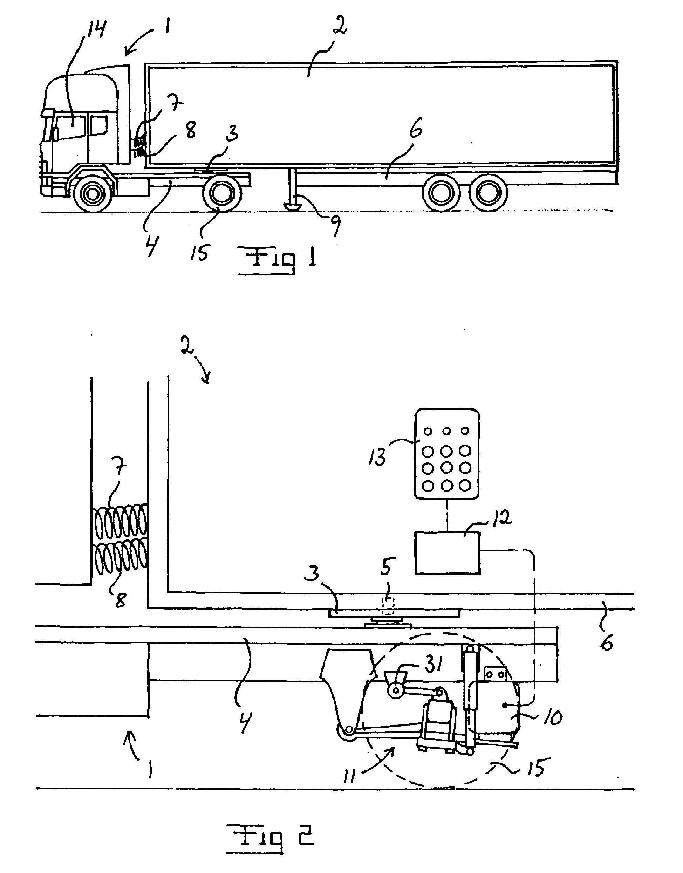

Fig 1 schematically illustrates a semi-trailer towing vehicle 1 provided with a safety system according to the invention. Details of the rear part of the towing vehicle 1 are schematically illustrated in Fig 2. In Figs 1 and 2 the towing vehicle 1 is shown when coupled to a semi-trailer 2 of conventional type. The towing vehicle 1 is provided with a coupling member 3 conventionally referred to as a fifth wheel. The fifth wheel 3 constitutes a horizontally disposed platelike member fixedly mounted on the chassis 4 of the towing vehicle at the rear part of the towing vehicle. The fifth wheel 3 has a rearwardly extending slot therein for receiving a king pin 5 that projects downward from the chassis 6 of the semi-trailer. The king pin 5 is illustrated in broken lines in Fig 2. The king pin is locked in place in the slot of the fifth wheel by means of a locking member. The slot in the fifth wheel and the locking member are of designs known per se and are not shown in Figs 1 and 2. Electrical and pneumatic service lines 7, 8 extend between the towing vehicle 1 and the semi-trailer 2. The electrical and pneumatic service lines of the towing vehicle 1 are connected to the corresponding ports and connectors of the semi-trailer 2 via conventional connection devices, which are not shown in Figs 1 and 2. The connection devices may be manually or automatically operated for manual or automatic connection and disconnection of the respective service line 7, 8. A support leg 9 is provided under the chassis 6 of the semi-trailer so as to support the semi-trailer 2 when uncoupled from the towing vehicle. The support leg 9 is vertically moveable in relation to the semi-trailer's chassis 6 and may be extended and retracted manually or with the aid of automatic manoeuvring devices. In Fig 1 the support leg 9 is shown in the supporting position.

The towing vehicle 1 is provided with air bellows 10 at the rear wheel suspension 11. The height of the rear part of the towing vehicle's chassis 4 is adjustable by regulation of the air pressure of the air bellows 10. The air pressure of said air bellows 10 is regulated by means of a control unit 12, which in its turn is controlled by the driver of the towing vehicle via a control device 13. The control device 13 may be fixedly mounted in the cabin 14 of the towing vehicle or mobile. One of the rear wheels 15 of the towing vehicle is indicated in broken lines in Fig 2.

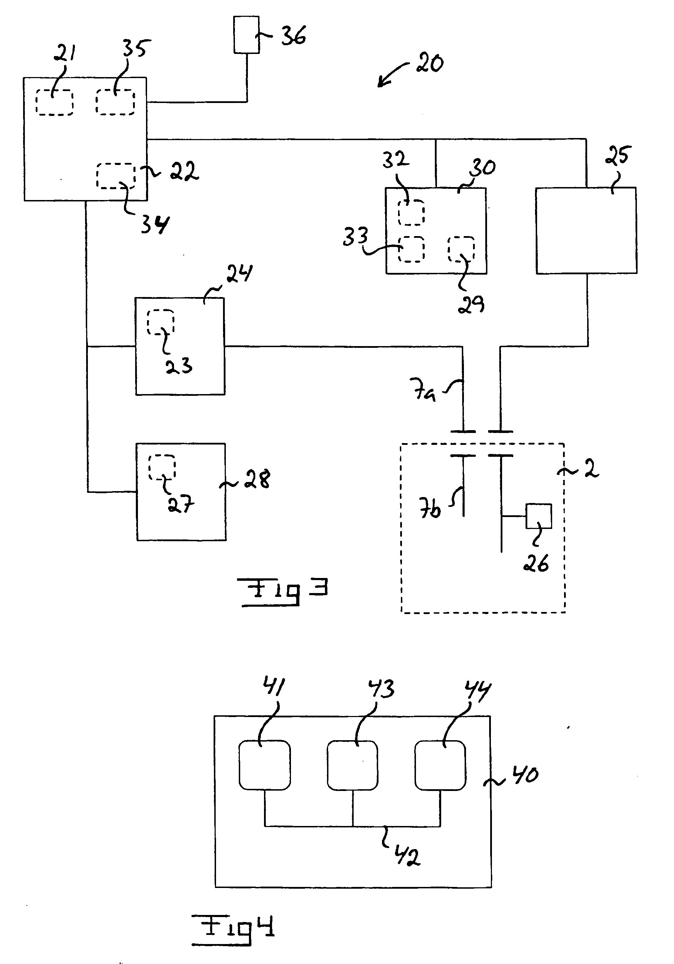

An embodiment of a safety system 20 according to the invention is illustrated in Fig 3. In Fig 3, the semi-trailer 2 is schematically indicated in broken lines. The parts included in the safety system 20 are arranged in the towing vehicle 1.

The safety system comprises means 21 for detecting whether measures have been taken to uncouple the towing vehicle from a semi-trailer. Said means may for instance be integrated in the main electronic control unit (ECU) 22 of the towing vehicle. Several different manners of detecting whether measures have been taken to uncouple the towing vehicle from a semi-trailer may be contemplated. This detection is advantageously based on information received from sensors and other equipment that are conventionally provided on modern towing vehicles. In a simplified embodiment of the invention, the means 21 for detecting whether measures have been taken to uncouple the towing vehicle from a semi-trailer could be adapted to detect this when it is established that the towing vehicle 1 has been electrically disconnected from the semi-trailer 2, i.e. that the electrical service line 7 of the towing vehicle is disconnected from the semi-trailer. According to this embodiment, the safety system consequently comprises means 23 for establishing whether the towing vehicle is electrically connected to a semi-trailer. Said means 23 could for instance be included in an electronic control unit 24 adapted to control the lightning appliances of the towing vehicle 1 and the semi-trailer 2. In the latter case, the means 23 could be adapted to sense the load on the electrical current outlet to the lamps provided on the semi-trailer. A lack of load on this electrical current outlet indicates that the electrical service line 7a of the towing vehicle is disconnected from the electrical line 7b of the semi-trailer.

In another simplified embodiment of the invention, the means 21 for detecting whether measures have been taken to uncouple the towing vehicle from a semi-trailer could be adapted to detect this when it is established that the brake system control unit 25 of the towing vehicle 1 does not receive any message from the Electronic Brake System (EBS) control unit 26 of the semi-trailer.

In a more advanced embodiment of the invention, the means 21 for detecting whether measures have been taken to uncouple the towing vehicle from a semi-trailer may for instance be adapted to detect this when the following conditions, optionally in combination with one or several further conditions, are simultaneously fulfilled:
- it is established, for instance in the above-indicated manner, that the towing vehicle 1 has been electrically disconnected from the semi-trailer 2,
- it is established that the towing vehicle is standing still, and
- it is established that the chassis height at the rear part of the towing vehicle has been increased just before or after the establishment that the towing vehicle is standing still.

The safety system according to the above-indicated advanced embodiment comprises means 27 for establishing whether the towing vehicle is standing still. Said means 27 may for instance be adapted to establish this by establishing that the parking brake of the towing vehicle has been activated and/or by establishing that the speed of the towing vehicle is zero. In the latter case, said means 27 could be included in the tachometer control unit 28.

The safety system according to the above-indicated advanced embodiment also comprises means 29 for establishing whether the chassis height at the rear part of the towing vehicle is increased. Said means 29 may for instance be included in the suspension control unit 30 and receive information from a level sensor 31 (see Fig 2) arranged to sense variations in the distance between the towing vehicle's chassis 4 and the rear axle of the towing vehicle.

The safety system 20 according to the invention further comprises means 32 for determining the air pressure P_{ab} of the air bellows 10. Said means 32 may for instance be included in the suspension control unit 30 and receive information from a pressure sensor. The safety system 20 also comprises means 33, for instance included in the suspension control unit 30 or in the main control unit 22, for comparing the air pressure P_{ab} of the air bellows with a given pressure threshold value P₁. The pressure threshold value P₁ is so chosen that the towing vehicle 1, when uncoupled from the semi-trailer 2, may be driven away from the semi-trailer 2 without the rear part of the towing vehicle 1 being thrown upwards and hitting the semi-trailer when the fifth wheel 3 passes the front edge of the semi-trailer as the air pressure of the rear wheel suspension's air bellows 10 is below the pressure threshold value P₁.

The safety system 20 according to the invention further comprises safety means 34, for instance included in the main control unit 22, for automatically initiating safety measures so as to prevent the towing vehicle 1 from being damaged by the semi-trailer 2 when driven away from the semi-trailer.

According to a simplified embodiment, the safety means 34 are adapted to initiate said safety measures when the following conditions are simultaneously fulfilled:
- it has been detected, for instance in the above-indicated manner, that measures have been taken to uncouple the towing vehicle from a semi-trailer, and
- the air pressure P_{ab} of the air bellows 10 exceeds the pressure threshold value P₁.

According to a more advanced embodiment, the safety means 34 are adapted to initiate said safety measures when the following conditions are simultaneously fulfilled:
- it has been detected, for instance in the above-indicated manner, that measures have been taken to uncouple the towing vehicle from a semi-trailer,
- the air pressure P_{ab} of the air bellows 10 exceeds the pressure threshold value P₁, and
- it has been detected that the driver intends to drive the towing vehicle away from the semi-trailer.

In the latter case, the safety system 20 also comprises means 35, for instance included in the main control unit 22, for detecting whether a driver intends to drive the towing vehicle 1 away from the semi-trailer 2. Such a detection could for instance be based on the determination that the driver depresses the throttle lever to a depression level exceeding a given depression level threshold value or that the speed of the towing vehicle exceeds a given speed threshold value. The detection that a driver intends to drive the towing vehicle 1 away from the semi-trailer 2 could also be based on the determination that the parking brake has been released, that the towing vehicle has been put in gear or that the clutch has been engaged.

According to an advantageous embodiment of the invention, the safety means 34 are adapted to initiate passive safety measures by presenting a warning to a driver of the towing vehicle when the above-indicated conditions are fulfilled. The warning is for instance presented in the form of an acoustic signal and/or a light signal, for instance via a warning indicator 36 arranged in the cabin 14 of the towing vehicle. The warning is suitably presented until it is established that the air pressure P_{ab} of the air bellows 10 no longer exceeds the pressure threshold value P₁, whereupon the warning is cut off.

According to another embodiment of the invention, the safety means 34 are adapted to initiate active safety measures, optionally in combination with said passive measures, when the above-indicated conditions are fulfilled. The active safety measures could for instance constitute measures for preventing the towing vehicle 1 from being driven away from the semi-trailer 2, for instance by preventing the parking brake from being released, by preventing the engine from being accelerated or by bringing about a substantial reduction of the maximum allowed speed of the towing vehicle, for instance by restricting the - maximum allowed engine torque. The active safety measures could also constitute measures for bringing about an automatic lowering of the air pressure P_{ab} of the air bellows 10 to a level below the pressure threshold value P₁.

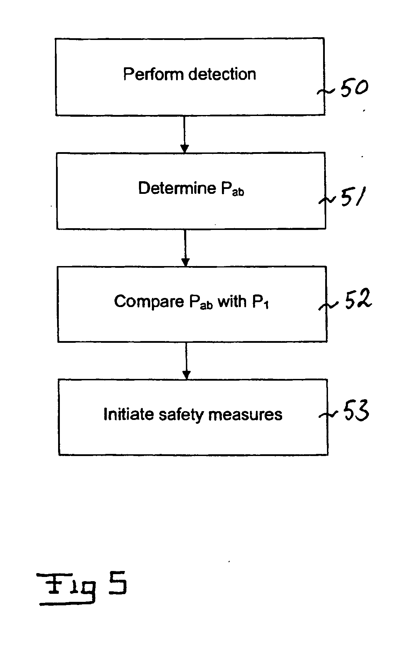

A flow diagram detailing a method according to a basic embodiment of the invention is shown in Fig 5. In a first step 50, a detection is performed, e.g. in the above-indicated manner, to determine whether measures have been taken to uncouple the towing vehicle from a semi-trailer. In a second step 51, the air pressure P_{ab} of the air bellows is determined. In a third step 52, the thus determined air pressure P_{ab} of the air bellows is compared with a given pressure threshold value P₁. In a fourth step 53, safety measures are automatically initiated so as to prevent the towing vehicle from being damaged by the semi-trailer when driven away from the semi-trailer. Said safety measures are initiated when the following conditions, optionally in combination with one or several further conditions, are simultaneously fulfilled:
- it has been detected in said first step 50 that measures have been taken to uncouple the towing vehicle from a semi-trailer, and
- the comparison performed in said third step 52 indicates that the air pressure P_{ab} of the air bellows exceeds the pressure threshold value P₁.

Computer program code for implementing the method according to the invention is suitably included in a computer program, which is loadable directly into the internal memory of a computer or an electronic control unit, such as the internal memory of the main electronic control unit 22 of the towing vehicle. Such a computer program is suitably provided via a computer program product comprising a data storage medium readable by an electronic control unit, which data storage medium has the computer program stored thereon. Said data storage medium is for instance an optical data storage medium in the form of a CD-ROM disc, a DVD disc etc, or a magnetic data storage medium in the form of a hard disc, a diskette, a cassette tape etc.

The computer program according to the invention comprises computer program code for causing a computer or an electronic control unit to:
- detect whether measures have been taken to uncouple a towing vehicle from a semi-trailer;
- determine or receive a value of the air pressure P_{ab} of the air bellows of the towing vehicle;
- compare said air pressure value P_{ab} with a given pressure threshold value P₁;
- determine whether the following conditions, optionally in combination with one or several further conditions, are simultaneously fulfilled:
   - the detection indicates that measures have been taken to uncouple the towing vehicle from a semi-trailer, and
   - the comparison indicates that the air pressure value P_{ab} exceeds the pressure threshold value P₁; and
- automatically initiate safety measures when it has been determined that said conditions are simultaneously fulfilled so as to prevent the towing vehicle from being damaged by the semi-trailer when driven away from the semi-trailer.

Fig 4 very schematically illustrates an electronic control unit 40 comprising an execution means 41, such as a central processing unit (CPU), for executing computer software. The execution means 41 communicates with a memory 43, for instance of the type RAM, via a data bus 42. The control unit 40 also comprises data storage medium 44, for instance in the form of a memory of the type ROM, PROM, EPROM or EEPROM or a Flash memory. The execution means 41 communicates with the data storage medium 44 via the data bus 42. A computer program comprising computer program code for implementing the method according to the invention is stored on the data storage medium 44.

The invention is of course not in any way restricted to the preferred embodiments described above, on the contrary many possibilities to modifications thereof should be apparent to a person skilled in the art without departing from the basic idea of the invention as defined in the appended claims.

## Claims

1. A safety system for a semi-trailer (2) towing vehicle (1) provided with air bellows at the rear wheel suspension (11), the chassis height of the towing vehicle (1) being adjustable by regulation of the air pressure of the air bellows, **characterized in that** the safety system (20) comprises:
- means (21) for detecting whether measures have been taken to uncouple the towing vehicle from a semi-trailer;
- means (32) for determining the air pressure (P_{ab}) of the air bellows;
- means (33) for comparing the air pressure (P_{ab}) of the air bellows with a given pressure threshold value (P₁); and
- safety means (34) for automatically initiating safety measures so as to prevent the towing vehicle from being damaged by the semi-trailer when driven away from the semi-trailer, the safety means (34) being adapted to initiate said safety measures when the following conditions, optionally in combination with one or several further conditions, are simultaneously fulfilled:
- it has been detected that measures have been taken to uncouple the towing vehicle from a semi-trailer, and
- the air pressure (P_{ab}) of the air bellows exceeds the pressure threshold value (P₁).

2. A safety system according to claim 1, **characterized in that** the safety means (34) are adapted to present a warning to a driver of the towing vehicle when said conditions are simultaneously fulfilled.

3. A safety system according to claim 2, **characterized in that** the safety system comprises means (35) for detecting whether a driver intends to drive the towing vehicle away from the semi-trailer, and that the safety means (34) are adapted to present a warning to the driver of the towing vehicle when the following conditions are simultaneously fulfilled:
- it has been detected that measures have been taken to uncouple the towing vehicle from a semi-trailer,
- the air pressure (P_{ab}) of the air bellows exceeds the pressure threshold value (P₁), and
- it has been detected that the driver intends to drive the towing vehicle away from the semi-trailer.

4. A safety system according to claim 2 or 3, **characterized in that** the safety means (34) are adapted to present the warning in the form of an acoustic signal and/or a light signal.

5. A safety system according any of claims 2-4, **characterized in that** the safety system (20) comprises a warning indicator (36) arranged in the cabin of the towing vehicle.

6. A safety system according to any of the preceding claims, **characterized in that** the safety means (34) are adapted to prevent the towing vehicle from being driven away from the semi-trailer when said conditions are simultaneously fulfilled.

7. A safety system according to any of the preceding claims, **characterized in that** the safety system comprises means (35) for detecting whether a driver intends to drive the towing vehicle away from the semi-trailer, and that the safety means (34) are adapted to bring about a lowering of the air pressure (P_{ab}) of the air bellows when the following conditions are simultaneously fulfilled:
- it has been detected that measures have been taken to uncouple the towing vehicle from a semi-trailer,
- the air pressure (P_{ab}) of the air bellows exceeds the pressure threshold value (P₁), and
- it has been detected that the driver intends to drive the towing vehicle away from the semi-trailer.

8. A safety system according to any of the preceding claims, **characterized in that** the safety system comprises means (23) for establishing whether the towing vehicle is electrically connected to a semi-trailer, means (27) for establishing whether the towing vehicle is standing still and means (29) for establishing whether the chassis height at the rear part of the towing vehicle is increased, and that the means (21) for detecting whether measures have been taken to uncouple the towing vehicle from a semi-trailer are adapted to detect this when the following conditions, optionally in combination with one or several further conditions, are simultaneously fulfilled:
- it is established that the towing vehicle has been electrically disconnected from the semi-trailer,
- it is established that the towing vehicle is standing still, and
- it is established that the chassis height at the rear part of the towing vehicle has been increased just before or after the establishment that the towing vehicle is standing still.

9. A safety system according to claim 8, **characterized in that** the means (27) for establishing whether the towing vehicle is standing still are adapted to establish this by establishing that the parking brake of the towing vehicle has been activated and/or by establishing that the speed of the towing vehicle is zero.

10. A safety system according to any of claims 1-7, **characterized in that** the safety system comprises means (23) for establishing whether the towing vehicle is electrically connected to a semi-trailer, and that the means (21) for detecting whether measures have been taken to uncouple the towing vehicle from a semi-trailer are adapted to detect this when it is established that the towing vehicle has been electrically disconnected from the semi-trailer.

11. A semi-trailer towing vehicle, **characterized in that** it is provided with a safety system according to any of claims 1-10.

12. A method for preventing damages to a semi-trailer (2) towing vehicle (1) provided with air bellows at the rear wheel suspension (11), the chassis height of the towing vehicle being adjustable by regulation of the air pressure of the air bellows, **characterized in that** the method comprises the following steps:
- detecting whether measures have been taken to uncouple the towing vehicle from a semi-trailer;
- determining the air pressure (P_{ab}) of the air bellows;
- comparing the air pressure (P_{ab}) of the air bellows with a given pressure threshold value (P₁); and
- automatically initiating safety measures so as to prevent the towing vehicle from being damaged by the semi-trailer when driven away from the semi-trailer, the safety measures being initiated when the following conditions, optionally in combination with one or several further conditions, are simultaneously fulfilled:
- it has been detected that measures have been taken to uncouple the towing vehicle from a semi-trailer, and
- the air pressure (P_{ab}) of the air bellows exceeds the pressure threshold value (P₁).

13. A method according to claim 12, **characterized in that** a warning is presented to a driver of the towing vehicle when said conditions are simultaneously fulfilled.

14. A method according to claim 13, **characterized in that** it is detected whether a driver intends to drive the towing vehicle away from the semi-trailer, and that a warning is presented to a driver of the towing vehicle when the following conditions are simultaneously fulfilled:
- it has been detected that measures have been taken to uncouple the towing vehicle from a semi-trailer,
- the air pressure (P_{ab}) of the air bellows exceeds the pressure threshold value (P₁), and
- it has been detected that the driver intends to drive the towing vehicle away from the semi-trailer.

15. A method according to claim 13 or 14, **characterized in that** the warning is presented in the form of an acoustic signal and/or a light signal.

16. A method according any of claims 13-15, **characterized in that** the warning is presented via a warning indicator (36) arranged in the cabin of the towing vehicle.

17. A method according to any of claims 12-16, **characterized in that** safety measures are automatically initiated to prevent the towing vehicle from being driven away from the semi-trailer when said conditions are simultaneously fulfilled.

18. A method according to any of claims 12-17, **characterized in that** it is detected whether a driver intends to drive the towing vehicle away from the semi-trailer, and that a lowering of the air pressure (P_{ab}) of the air bellows is brought about when the following conditions are simultaneously fulfilled:
- it has been detected that measures have been taken to uncouple the towing vehicle from a semi-trailer,
- the air pressure (P_{ab}) of the air bellows exceeds the pressure threshold value (P₁), and
- it has been detected that the driver intends to drive the towing vehicle away from the semi-trailer.

19. A method according to any of claims 12-18, **characterized in that** it is detected that measures have been taken to uncouple the towing vehicle from a semi-trailer when the following conditions, optionally in combination with one or several further conditions, are simultaneously fulfilled:
- it is established that the towing vehicle has been electrically disconnected from the semi-trailer,
- it is established that the towing vehicle is standing still, and
- it is established that the chassis height at the rear part of the towing vehicle has been increased just before or after the establishment that the towing vehicle is standing still.

20. A method according to claim 19, **characterized in that** the towing vehicle is standing still is established by establishing that the parking brake of the towing vehicle has been activated and/or by establishing that the speed of the towing vehicle is zero.

21. A method according to any of claims 12-18, **characterized in that** it is detected that measures have been taken to uncouple the towing vehicle from a semi-trailer when it is established that the towing vehicle has been electrically disconnected from the semi-trailer.

22. A computer program loadable directly into the internal memory of a computer or an electronic control unit, which computer program comprises computer program code for causing the computer or electronic control unit to:
- detect whether measures have been taken to uncouple a towing vehicle from a semi-trailer;
- determine or receive a value of the air pressure (P_{ab}) of the air bellows of the towing vehicle;
- compare said air pressure value (P_{ab}) with a given pressure threshold value (P₁);
- determine whether the following conditions, optionally in combination with one or several further conditions, are simultaneously fulfilled:
- the detection indicates that measures have been taken to uncouple the towing vehicle from a semi-trailer, and
- the comparison indicates that the air pressure value (P_{ab}) exceeds the pressure threshold value (P₁); and
- automatically initiate safety measures when it has been determined that said conditions are simultaneously fulfilled so as to prevent the towing vehicle from being damaged by the semi-trailer when driven away from the semi-trailer.

23. A computer program product comprising a data storage medium readable by an electronic control unit (22; 40), a computer program according to claim 22 being stored on said data storage medium.

24. An electronic control unit (40) comprising an execution means (41), a memory (43) connected to the execution means and a data storage medium (44) connected to the execution means, a computer program according to claim 22 being stored on said data storage medium (44).

## Patentansprüche

1. Sicherungssystem für ein Zugfahrzeug (1) mit Sattelanhänger (2), das mit Luftbälgen an der Hinterradaufhängung ausgestattet ist, wobei die Chassishöhe des Zugfahrzeugs (1) durch Steuerung des Luftdrucks der Luftbälge anpassbar ist, **dadurch gekennzeichnet, dass** das Sicherungssystem (20) aufweist:
- Mittel (21) zum Ermitteln, ob Maßnahmen ergriffen worden sind, um das Zugfahrzeug von einem Sattelanhänger zu entkoppeln;
- Mittel (32) zum Bestimmen des Luftdrucks (P_{ab}) der Luftbälge;
- Mittel (33) zum Vergleichen des Luftdrucks (P_{ab}) der Luftbälge mit einem vorgegebenen Druckgrenzwert (P₁); und
- Sicherungsmittel (34) zum automatischen Veranlassen von Sicherungsmaßnahmen, um zu verhindern, dass das Zugfahrzeug durch den Sattelanhänger beschädigt wird, wenn es von dem Sattelanhänger weggefahren wird, wobei die Sicherungsmittel (34) dazu ausgebildet sind, um die Sicherungsmaßnahmen zu veranlassen, wenn die folgenden Bedingungen, optional in Kombination mit einer oder mehreren weiteren Bedingungen, gleichzeitig erfüllt sind:
- es wurde ermittelt, dass Maßnahmen ergriffen worden sind, um das Zugfahrzeug von einem Sattelanhänger zu entkoppeln, und
- der Luftdruck (P_{ab}) der Luftbälge überschreitet den Druckgrenzwert (P₁).

2. Sicherungssystem nach Anspruch 1, **dadurch gekennzeichnet, dass** die Sicherungsmittel (34) dazu ausgebildet sind, um eine Warnung an einen Fahrer des Zugfahrzeugs auszugeben, wenn die Bedingungen gleichzeitig erfüllt sind.

3. Sicherungssystem nach Anspruch 2, **dadurch gekennzeichnet, dass** das Sicherungssystem Mittel (35) aufweist zum Ermitteln, ob ein Fahrer die Absicht hat, das Zugfahrzeug von dem Sattelanhänger wegzufahren, und dass die Sicherungsmittel (34) ausgebildet sind, um eine Warnung an den Fahrer des Zugfahrzeugs auszugeben, wenn die folgenden Bedingungen gleichzeitig erfüllt sind:
- es wurde ermittelt, dass Maßnahmen ergriffen worden sind, um das Zugfahrzeug von einem Sattelanhänger zu entkoppeln,
- der Luftdruck (P_{ab}) der Luftbälge überschreitet den Druckgrenzwert (P₁), und
- es wurde ermittelt, dass der Fahrer die Absicht hat, das Zugfahrzeug von dem Sattelanhänger wegzufahren.

4. Sicherungssystem nach Anspruch 2 oder 3, **dadurch gekennzeichnet, dass** die Sicherungsmittel (34) ausgebildet sind, um die Warnung in der Form eines akustischen Signals und/oder eines Lichtsignals auszugeben.

5. Sicherungssystem nach einem der Ansprüche 2 bis 4, **dadurch gekennzeichnet, dass** das Sicherungssystem (20) eine Warnanzeige (36) aufweist, die in der Kabine des Zugfahrzeugs angeordnet ist.

6. Sicherungssystem nach einem der vorhergehenden Ansprüche, **dadurch gekennzeichnet, dass** die Sicherungsmittel (34) ausgebildet sind, um zu verhindern, dass das Zugfahrzeug von dem Sattelanhänger weggefahren wird, wenn die Bedingungen gleichzeitig erfüllt sind.

7. Sicherungssystem nach einem der vorhergehenden Ansprüche, **dadurch gekennzeichnet, dass** das Sicherungssystem Mittel (35) aufweist zum Ermitteln, ob ein Fahrer die Absicht hat, das Zugfahrzeug von dem Sattelanhänger wegzufahren, und dass die Sicherungsmittel (34) ausgebildet sind, um ein Absenken des Luftdrucks (P_{ab}) der Luftbälge zu bewirken, wenn die folgenden Bedingungen gleichzeitig erfüllt sind:
- es wurde ermittelt, dass Maßnahmen ergriffen worden sind, um das Zugfahrzeug von einem Sattelanhänger zu entkoppeln,
- der Luftdruck (P_{ab}) der Luftbälge überschreitet den Druckgrenzwert (P₁), und
- es wurde ermittelt, dass der Fahrer die Absicht hat, das Schleppfahrzeug von dem Sattelanhänger wegzufahren.

8. Sicherungssystem nach einem der vorhergehenden Ansprüche, **dadurch gekennzeichnet, dass** das Sicherungssystem Mittel (23) aufweist zum Ermitteln, ob das Zugfahrzeug elektrisch mit einem Sattelanhänger verbunden ist, Mittel (27) zum Ermitteln, ob das Zugfahrzeug stillsteht, und Mittel (29) zum Ermitteln, ob die Chassishöhe an dem hinteren Teil des Zugfahrzeugs erhöht ist, und dass die Mittel (21) zum Ermitteln, ob Maßnahmen ergriffen worden sind, um das Zugfahrzeug von einem Sattelanhänger zu entkoppeln, ausgebildet sind, um dies zu ermitteln, wenn die folgenden Bedingungen, optional in Kombination mit einer oder mehreren weiteren Bedingungen, gleichzeitig erfüllt sind:
- es wurde ermittelt, dass das Zugfahrzeug elektrisch von dem Sattelanhänger abgekoppelt worden ist,
- es wurde ermittelt, dass das Zugfahrzeug stillsteht, und
- es wurde ermittelt, dass die Chassishöhe an dem hinteren Teil des Zugfahrzeugs erhöht worden ist, gerade bevor oder nachdem ermittelt wurde, dass das Zugfahrzeug stillsteht.

9. Sicherungssystem nach Anspruch 8, **dadurch gekennzeichnet, dass** die Mittel (27) zum Ermitteln, ob das Zugfahrzeug stillsteht, ausgebildet sind, um dies **dadurch** zu ermitteln, dass ermittelt wird, dass die Feststellbremse des Zugfahrzeugs aktiviert worden ist und/oder durch Ermitteln, dass die Geschwindigkeit des Zugfahrzeugs gleich Null ist.

10. Sicherungssystem nach einem der Ansprüche 1 bis 7, **dadurch gekennzeichnet, dass** das Sicherungssystem Mittel (23) aufweist zum Ermitteln, ob das Zugfahrzeug elektrisch mit einem Sattelanhänger verbunden ist, und dass die Mittel (21) zum Ermitteln, ob Maßnahmen ergriffen worden sind, um das Zugfahrzeug von einem Sattelanhänger zu entkoppeln, ausgebildet sind, um dies zu ermitteln, wenn ermittelt worden ist, dass das Zugfahrzeug elektrisch von dem Sattelanhänger entkoppelt worden ist.

11. Zugfahrzeug mit einem Sattelanhänger, **dadurch gekennzeichnet, dass** es mit einem Sicherungssystem nach einem der Ansprüche 1 bis 10 ausgestattet ist.

12. Verfahren zum Verhindern von Schäden an einem Zugfahrzeug (1) mit einem Sattelanhänger (2), das mit Luftbälgen an der Hinterradaufhängung (11) ausgestattet ist, wobei die Chassishöhe des Zugfahrzeugs durch Steuerung des Luftdrucks der Luftbälge anpassbar ist, **dadurch gekennzeichnet, dass** das Verfahren die folgenden Schritte aufweist:
- Ermitteln, ob Maßnahmen ergriffen worden sind, um das Zugfahrzeug von einem Sattelanhänger zu entkoppeln;
- Bestimmen des Luftdrucks (P_{ab}) der Luftbälge;
- Vergleichen des Luftdrucks (P_{ab}) der Luftbälge mit einem vorgegebenen Druckgrenzwert (P₁); und
- automatisches Veranlassen von Sicherungsmaßnahmen, um zu verhindern, dass das Zugfahrzeug durch den Sattelanhänger beschädigt wird, wenn es von dem Sattelanhänger weggefahren wird, wobei die Sicherungsmaßnahmen veranlasst werden, wenn die folgenden Bedingungen, optional in Kombination mit einer oder mehreren weiteren Bedingungen, gleichzeitig erfüllt sind:
- es wurde ermittelt, dass Maßnahmen ergriffen worden sind, um das Zugfahrzeug von einem Sattelanhänger zu entkoppeln, und
- der Luftdruck (P_{ab}) der Luftbälge überschreitet den Druckgrenzwert (P₁),

13. Verfahren nach Anspruch 12, **dadurch gekennzeichnet, dass** eine Warnung an einen Fahrer des Zugfahrzeugs ausgegeben wird, wenn die Bedingungen gleichzeitig erfüllt sind.

14. Verfahren nach Anspruch 13, **dadurch gekennzeichnet, dass** ermittelt wird, ob ein Fahrer die Absicht hat, das Zugfahrzeug von dem Sattelanhänger wegzufahren, und dass eine Warnung an einen Fahrer des Zugfahrzeugs ausgegeben wird, wenn die folgenden Bedingungen gleichzeitig erfüllt sind:
- es wurde ermittelt, dass Maßnahmen ergriffen worden sind, um das Zugfahrzeug von einem Sattelanhänger zu entkoppeln,
- der Luftdruck (P_{ab}) der Luftbälge überschreitet den Druckgrenzwert (P₁), und
- es wurde ermittelt, dass der Fahrer die Absicht hat, das Zugfahrzeug von dem Sattelanhänger wegzufahren.

15. Verfahren nach Anspruch 13 oder 14, **dadurch gekennzeichnet, dass** die Warnung in der Form eines akustischen Signals und/oder eines Lichtsignals ausgegeben wird.

16. Verfahren nach einem der Ansprüche 13 bis 15, **dadurch gekennzeichnet, dass** die Warnung über eine Warnanzeige (36) ausgegeben wird, die in der Kabine des Zugfahrzeugs angeordnet ist.

17. Verfahren nach einem der Ansprüche 12 bis 16, **dadurch gekennzeichnet, dass** die Sicherungsmaßnahmen automatisch veranlasst werden, um zu verhindern, dass das Zugfahrzeug von dem Sattelanhänger weggefahren wird, wenn die Bedingungen gleichzeitig erfüllt sind.

18. Verfahren nach einem der Ansprüche 12 bis 17, **dadurch gekennzeichnet, dass** ermittelt wird, ob ein Fahrer die Absicht hat, das Zugfahrzeug von dem Sattelanhänger wegzufahren, und dass ein Absenken des Luftdrucks (P_{ab}) der Luftbälge bewirkt wird, wenn die folgenden Bedingungen gleichzeitig erfüllt sind:
- es wurde ermittelt, dass Maßnahmen ergriffen worden sind, um das Zugfahrzeug von einem Sattelanhänger zu entkoppeln,
- der Luftdruck (P_{ab}) der Luftbälge überschreitet den Druckgrenzwert (P₁), und
- es wurde ermittelt, dass der Fahrer die Absicht hat, das Zugfahrzeug von dem Sattelanhänger wegzufahren.

19. Verfahren nach einem der Ansprüche 12 bis 18, **dadurch gekennzeichnet, dass** ermittelt wird, dass Maßnahmen ergriffen worden sind, um das Zugfahrzeug von einem Sattelanhänger zu entkoppeln, wenn die folgenden Bedingungen, optional in Kombination mit einer oder mehreren weiteren Bedingungen, gleichzeitig erfüllt sind:
- es wird ermittelt, dass das Zugfahrzeug elektrisch von dem Sattelanhänger entkoppelt worden ist,
- es wird ermittelt, dass das Zugfahrzeug stillsteht, und
- es wird ermittelt, dass die Chassishöhe an dem hinteren Teil des Zugfahrzeugs erhöht worden ist gerade bevor oder nach dem Ermitteln, dass das Zugfahrzeug stillsteht.

20. Verfahren nach Anspruch 19, **dadurch gekennzeichnet, dass** ermittelt wird, dass das Zugfahrzeug stillsteht, indem ermittelt wird, dass die Feststellbremse des Zugfahrzeug aktiviert worden ist und/oder indem ermittelt wird, dass die Geschwindigkeiten des Zugfahrzeugs gleich Null ist.

21. Verfahren nach einem der Ansprüche 12 bis 18, **dadurch gekennzeichnet, dass** ermittelt wird, dass Maßnahmen ergriffen worden sind, um das Zugfahrzeug von einem Sattelanhänger zu entkoppeln, wenn ermittelt wird, dass das Zugfahrzeug elektrisch von dem Sattelanhänger entkoppelt worden ist.

22. Computerprogramm, das direkt in den internen Speicher eines Computers oder in eine elektrische Steuereinheit ladbar ist, wobei das Computerprogramm einen Computerprogrammcode aufweist, um den Computer oder die elektronische Steuereinheit zu veranlassen:
- zu ermitteln, ob Maßnahmen ergriffen worden sind, um ein Zugfahrzeug von einem Sattelanhänger zu entkoppeln;
- einen Wert des Luftdrucks (P_{ab}) der Luftbälge des Zugfahrzeugs zu bestimmen oder zu erhalten;
- den Luftdruckwert (P_{ab}) mit einem gegebenen Druckgrenzwert (P₁) zu vergleichen;
- zu ermitteln, ob die folgenden Bedingungen, optional in Kombination mit einer oder mehreren weiteren Bedingungen, gleichzeitig erfüllt sind;
- die Ermittlung zeigt an, dass Maßnahmen ergriffen worden sind, um das Zugfahrzeug von einem Sattelanhänger zu entkoppeln, und
- der Vergleich zeigt an, dass der Luftdruckwert (P_{ab}) den Druckgrenzwert (P₁) überschreitet; und
- automatisch die Sicherungsmaßnahmen zu veranlassen, wenn bestimmt worden ist, dass die Bedingungen gleichzeitig erfüllt sind, um zu verhindern, dass das Zugfahrzeug durch den Sattelanhänger beschädigt wird, wenn es von dem Sattelanhänger weggefahren wird.

23. Computerprogrammprodukt, das ein Datenspeichermedium aufweist, das von einer elektronischen Steuereinheit (22; 40) lesbar ist, wobei ein Computerprogramm nach Anspruch 22 auf dem Datenspeichermedium gespeichert ist.

24. Elektronische Steuereinheit (40), die Ausführmittel (41), einen Speicher (43), der mit den Ausführmitteln verbunden ist, und ein Datenspeichermedium (44) aufweist, das mit den Ausführmitteln verbunden ist, wobei ein Computerprogramm nach Anspruch 22 auf dem Datenspeichermedium (44) gespeichert ist.

## Revendications

1. Système de sécurité pour un véhicule de remorquage (1) d'une semi-remorque (2) muni de soufflets à air au niveau de la suspension de la roue arrière (11), la hauteur du châssis du véhicule de remorquage (1) pouvant être ajustée par régulation de la pression de l'air des soufflets à air, **caractérisé en ce que** le système de sécurité (20) comprend :
- des moyens (21) permettant de détecter si des mesures ont été prises pour découpler le véhicule de remorquage d'une semi-remorque ;
- des moyens (32) permettant de déterminer la pression de l'air (P_{ab}) des soufflets à air ;
- des moyens (33) permettant de comparer la pression de l'air (P_{ab}) des soufflets à air à une valeur seuil de pression donnée (P₁) ; et
- des moyens de sécurité (34) permettant de déclencher automatiquement des mesures de sécurité de manière à empêcher l'endommagement du véhicule de remorquage par la semi-remorque lorsqu'on l'éloigne de celle-ci, les moyens de sécurité (34) étant conçus pour déclencher lesdites mesures de sécurité lorsque les conditions suivantes, facultativement combinées à une ou plusieurs autres conditions, sont simultanément remplies :
- il a été détecté que des mesures ont été prises pour découpler le véhicule de remorquage d'une semi-remorque, et
- la pression de l'air (P_{ab}) des soufflets à air est supérieure à la valeur seuil de pression (P₁).

2. Système de sécurité selon la revendication 1, **caractérisé en ce que** les moyens de sécurité (34) sont conçus pour présenter un avertissement à un conducteur du véhicule de remorquage lorsque lesdites conditions sont simultanément remplies.

3. Système de sécurité selon la revendication 2, **caractérisé en ce que** le système de sécurité comprend des moyens (35) permettant de détecter si un conducteur a l'intention d'éloigner le véhicule de remorquage de la semi-remorque, et **en ce que** les moyens de sécurité (34) sont conçus pour présenter un avertissement au conducteur du véhicule de remorquage lorsque les conditions suivantes sont simultanément remplies :
- il a été détecté que des mesures ont été prises pour découpler le véhicule de remorquage d'une semi-remorque,
- la pression de l'air (P_{ab}) des soufflets à air est supérieure à la valeur seuil de pression (P₁), et
- il a été détecté que le conducteur a l'intention d'éloigner le véhicule de remorquage de la semi-remorque.

4. Système de sécurité selon la revendication 2 ou 3, **caractérisé en ce que** les moyens de sécurité (34) sont conçus pour présenter un avertissement sous la forme d'un signal acoustique et / ou d'un signal lumineux.

5. Système de sécurité selon l'une quelconque des revendications 2 à 4, **caractérisé en ce que** le système de sécurité (20) comprend un indicateur d'avertissement (36) agencé dans la cabine du véhicule de remorquage.

6. Système selon l'une quelconque des revendications précédentes, **caractérisé en ce que** les moyens de sécurité (34) sont conçus pour empêcher le véhicule de remorquage d'être éloigné de la semi-remorque lorsque lesdites conditions sont simultanément remplies.

7. Système de sécurité selon l'une quelconque des revendications précédentes, **caractérisé en ce que** le système de sécurité comprend des moyens (35) permettant de détecter si un conducteur a l'intention d'éloigner le véhicule de remorquage de la semi-remorque, et **en ce que** les moyens de sécurité (34) sont conçus pour produire une réduction de la pression de l'air (P_{ab}) des soufflets à air lorsque les conditions suivantes sont simultanément remplies :
- il a été détecté que des mesures ont été prises pour découpler le véhicule de remorquage d'une semi-remorque,
- la pression de l'air (P_{ab}) des soufflets à air est supérieure à la valeur seuil de pression (P₁), et
- il a été détecté que le conducteur a l'intention d'éloigner le véhicule de remorquage de la semi-remorque.

8. Système de sécurité selon l'une quelconque des revendications précédentes, **caractérisé en ce que** le système de sécurité comprend des moyens (23) permettant d'établir si le véhicule de remorquage est relié électriquement à une semi-remorque, des moyens (27) permettant d'établir si le véhicule de remorquage est à l'arrêt et des moyens (29) d'établir si la hauteur du châssis au niveau de la partie arrière du véhicule de remorquage est accrue, et **en ce que** les moyens (21) permettant de détecter si des mesures ont été prises pour découpler le véhicule de remorquage d'une semi-remorque sont conçus pour détecter cela lorsque les conditions suivantes, facultativement combinées à une ou plusieurs autres conditions, sont simultanément remplies :
- il est établi que le véhicule de remorquage a été déconnecté électriquement de la semi-remorque,
- il est établi que le véhicule de remorquage est à l'arrêt, et
- il est établi que la hauteur du châssis au niveau de la partie arrière du véhicule de remorquage a été augmentée juste avant ou après avoir établi que le véhicule de remorquage est à l'arrêt.

9. Système de sécurité selon la revendication 8, **caractérisé en ce que** les moyens (27) permettant d'établir si le véhicule de remorquage est à l'arrêt sont conçus pour établir cela en établissant que le frein de stationnement du véhicule de remorquage a été activé et / ou en établissant que la vitesse du véhicule de remorquage est égale à zéro.

10. Système de sécurité selon l'une quelconque des revendications 1 à 7, **caractérisé en ce que** le système de sécurité comprend des moyens (23) permettant d'établir si le véhicule de remorquage est relié électriquement à une semi-remorque, et **en ce que** les moyens (21) permettant de détecter si des mesures ont été prises pour découpler le véhicule de remorquage d'une semi-remorque sont conçus pour détecter cela lorsqu'il est établi que le véhicule de remorquage a été déconnecté électriquement de la semi-remorque.

11. Véhicule de remorquage d'une semi-remorque, **caractérisé en ce qu'**il est muni d'un système de sécurité selon l'une quelconque des revendications 1 à 10.

12. Procédé permettant d'empêcher l'endommagement d'un véhicule de remorquage (1) d'une semi-remorque (2) muni de soufflets à air au niveau de la suspension de la roue arrière (11), la hauteur du châssis du véhicule de remorquage pouvant être ajustée par régulation de la pression de l'air des soufflets à air, **caractérisé en ce que** le procédé comprend les étapes suivantes :
- détecter si des mesures ont été prises pour découpler le véhicule de remorquage d'une semi-remorque ;
- déterminer la pression de l'air (P_{ab}) des soufflets à air;
- comparer la pression de l'air (P_{ab}) des soufflets à air à une valeur seuil de pression donnée (P₁) ; et
- déclencher automatiquement des mesures de sécurité de manière à empêcher l'endommagement du véhicule de remorquage par la semi-remorque lorsqu'on l'éloigne de celle-ci, les mesures de sécurité étant déclenchées lorsque les conditions suivantes, facultativement combinées à une ou plusieurs autres conditions, sont simultanément remplies :
- il a été détecté que des mesures ont été prises pour découpler le véhicule de remorquage d'une semi-remorque, et
- la pression de l'air (P_{ab}) des soufflets à air est supérieure à la valeur seuil de pression (P₁).

13. Procédé selon la revendication 12, **caractérisé en ce qu'**un avertissement est présenté à un conducteur du véhicule de remorquage lorsque lesdites conditions sont simultanément remplies.

14. Procédé selon la revendication 13, **caractérisé en ce qu'**il est détecté si un conducteur a l'intention d'éloigner le véhicule de remorquage de la semi-remorque, et **en ce qu'**un avertissement est présenté à un conducteur du véhicule de remorquage lorsque les conditions suivantes sont simultanément remplies :
- il a été détecté que des mesures ont été prises pour découpler le véhicule de remorquage d'une semi-remorque,
- la pression de l'air (P_{ab}) des soufflets à air est supérieure à la valeur seuil de pression (P₁), et
- il a été détecté que le conducteur a l'intention d'éloigner le véhicule de remorquage de la semi-remorque.

15. Procédé selon la revendication 13 ou 14, **caractérisé en ce que** l'avertissement est présenté sous la forme d'un signal acoustique et / ou d'un signal lumineux.

16. Procédé selon l'une quelconque des revendications 13 à 15, **caractérisé en ce que** l'avertissement est présenté à l'aide d'un indicateur d'avertissement (36) agencé dans la cabine du véhicule de remorquage.

17. Procédé selon l'une quelconque des revendications 12 à 16, **caractérisé en ce que** les mesures de sécurité sont automatiquement déclenchées pour empêcher le véhicule de remorquage d'être éloigné de la semi-remorque lorsque lesdites conditions sont simultanément remplies.

18. Procédé selon l'une quelconque des revendications 12 à 17, **caractérisé en ce qu'**il est détecté si un conducteur a l'intention d'éloigner le véhicule de remorquage de la semi-remorque, et **en ce qu'**une réduction de la pression de l'air (P_{ab}) des soufflets à air est produite lorsque les conditions suivantes sont simultanément remplies :
- il a été détecté que des mesures ont été prises pour découpler le véhicule de remorquage d'une semi-remorque,
- la pression de l'air (P_{ab}) des soufflets à air est supérieure à la valeur seuil de pression (P₁), et
- il a été détecté que le conducteur a l'intention d'éloigner le véhicule de remorquage de la semi-remorque.

19. Procédé selon l'une quelconque des revendications 12 à 18, **caractérisé en ce qu'**il est détecté que des mesures ont été prises pour découpler le véhicule de remorquage d'une semi-remorque lorsque les conditions suivantes, facultativement combinées à une ou plusieurs autres conditions, sont simultanément remplies :
- il est établi que le véhicule de remorquage a été déconnecté électriquement de la semi-remorque,
- il est établi que le véhicule de remorquage est à l'arrêt, et
- il est établi que la hauteur du châssis au niveau de la partie arrière du véhicule de remorquage a été augmentée juste avant ou après avoir établi que le véhicule de remorquage est à l'arrêt.

20. Procédé selon la revendication 19, **caractérisé en ce qu'**il est établi que le véhicule de remorquage est à l'arrêt en établissant que le frein de stationnement du véhicule de remorquage a été activé et / ou en établissant que la vitesse du véhicule de remorquage est égale à zéro.

21. Procédé selon l'une quelconque des revendications 12 à 18, **caractérisé en ce qu'**il est détecté que des mesures ont été prises pour découpler le véhicule de remorquage d'une semi-remorque lorsqu'il est établi que le véhicule de remorquage a été déconnecté électriquement de la semi-remorque.

22. Programme informatique pouvant être chargé directement dans la mémoire interne d'un ordinateur ou d'une unité de commande électronique, ledit programme informatique comprenant un code de programme informatique destiné à faire produire les opérations suivantes par l'ordinateur ou l'unité de commande électronique :
- détecter si des mesures ont été prises pour découpler un véhicule de remorquage d'une semi-remorque ;
- déterminer ou recevoir une valeur de la pression de l'air (P_{ab}) des soufflets à air du véhicule de remorquage ;
- comparer ladite valeur de pression de l'air (P_{ab}) à une valeur seuil de pression donnée (P₁);
- déterminer si les conditions suivantes, facultativement combinées à une ou plusieurs autres conditions, sont simultanément remplies :
- la détection indique que des mesures ont été prises pour découpler le véhicule de remorquage d'une semi-remorque, et
- la comparaison indique que la valeur de la pression de l'air (P_{ab}) est supérieure à la valeur seuil de pression (P₁) ; et
- déclencher automatiquement des mesures de sécurité lorsqu'il a été déterminé que lesdites conditions sont simultanément remplies de manière à empêcher l'endommagement du véhicule de remorquage par la semi-remorque lorsqu'on l'éloigne de la semi-remorque.

23. Produit de programme informatique comprenant support de stockage des données pouvant être lu par une unité de commande électronique (22 ; 40), un programme informatique selon la revendication 22 étant mémorisé sur ledit support de stockage des données.

24. Unité de commande électronique (40) comprenant un moyen d'exécution (41), une mémoire (43) reliée au moyen d'exécution et un support de stockage des données (44) relié au moyen d'exécution, un programme informatique selon la revendication 22 étant stocké sur ledit support de stockage des données (44).
